# EUROPEAN PATENT APPLICATION

(11) **EP 0 736 713 A1**
(43) Date of publication of application: **09.10.1996**
(21) Application number: 96302290.0
(22) Date of filing: 01.04.1996
(51) Int. Cl.: F16L 3/12, F16L 3/13

(54) **Saddle clip**

(30) Priority: 03.04.1995 GB 9506882
(71) Applicant: Adaptaflex Limited, Coleshill Birmingham B46 1HT (GB)
(72) Inventor: McNeil, Alexander McKechran Hardie, Gladsville, New South Wales 2111 (AU)
(74) Representative: Russell, Paul Sidney

(57) **Abstract**

A saddle clip for securing corrugated flexible conduit comprises a saddle (10) and a cover (12) interconnected by a strap (14), the three elements being integrally moulded of nylon. The cover (12) comprises latching teeth (56,58) which engage in openings (48,50) in side arms (20,22) of the saddle to secure the cover. To release the cover, a suitable tool can be inserted through an opening (72), enabling that side of the cover remote from the connecting strap (14) to be lifted. A fulcrum arrangement (74) permits the cover to rock on a saddle base (16) during the releasing action, a hinge (68) in the strap (14) enabling the strap to fold under compression during the pivoting movement of the cover.

## Description

This invention is concerned with improvements in or relating to saddle clips for use in securing elongate generally-cylindrical bodies, such as tubular duct or pipe, to walls and other surfaces.

A known form of saddle clip for use in securing pipes, in plumbing installations, comprises a saddle having a flat-bottomed base and two spaced upstanding arms, the base and arms together forming a part-cylindrical pipe seating extending about rather more than 180°. The arms are resiliently separable in order that a pipe can be pressed down radially between them into the seating, so to be lightly restrained against withdrawal (i.e. in the radial direction). The clip comprises also a cover piece which can be snap-engaged over the two arms as a bridging piece to secure the pipe. The saddle and the cover piece are separable loose components.

It can be desirable that the saddle and cover parts of such a clip be secured together by some suitable strap or other flexible connection. However, when required to manufacture the components by moulding in such plastics materials as nylon 66 (the use of which may be highly desirable for other reasons associated with intended use for the clip) design problems can arise in reconciling conflicting demands for flexibility and structural performance of the strap.

The invention provides, in one of its aspects, a unitary saddle clip in which saddle, cover and connecting strap portions are together moulded in one piece, and wherein the cover can be applied to the saddle and retained thereby without structural reliance upon the interconnecting strap.

In a preferred construction, the cover portion is arranged to stand on a base portion of the saddle with oppositely-directed latching means of the cover engaged in latching recesses positioned on opposite sides of the saddle, so to prevent the cover being lifted radially from the saddle.

One of said latching means is positioned on a proximal side of the cover and saddle at which the connecting strap is attached, and the other on a distal side remote from the connecting strap. To enable the proximal latching means to be withdrawn from the associated latching recess, the cover is arranged to pivot on the base about a fulcrum positioned generally beneath the latching means, whereby after the distal latching means has been disengaged the proximal latching means can be withdrawn from the recess arcuately (in a direction extending generally radially of the saddle at that point) by a pivotal movement of the cover.

Disengagement of the distal latching means may be by means of a suitable tool, for example a screwdriver or other thin-bladed implement. In order to accommodate a longitudinal compression of the connecting strap during the pivotal movement of the cover, the strap may itself be hinged at an intermediate position along its length to enable some folding to occur.

There now follows a detailed description, to be read with reference to the accompanying drawings, of a saddle clip which illustrates the invention by way of example.

In the accompanying drawings:
Figure 1 is a perspective view of a saddle clip in an open condition;
Figure 2 is a top plan view of such a clip;
Figure 3 is an axial view of such a clip, being a section taken on line III-III of figure 2;

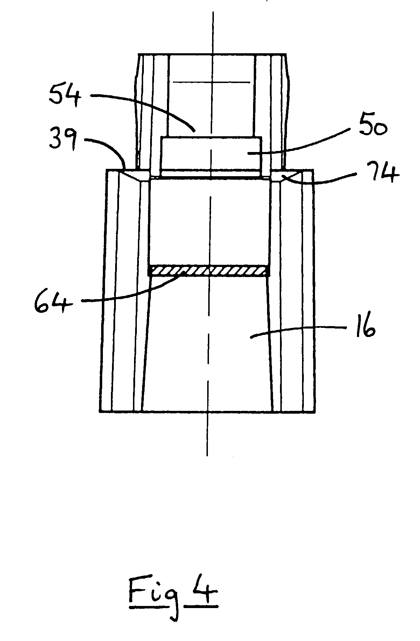

Figure 4 is a side view of the clip, being a section taken on line IV-IV of Figure 3; and
Figure 5 is a view similar to Figure 3 but showing the clip closed.

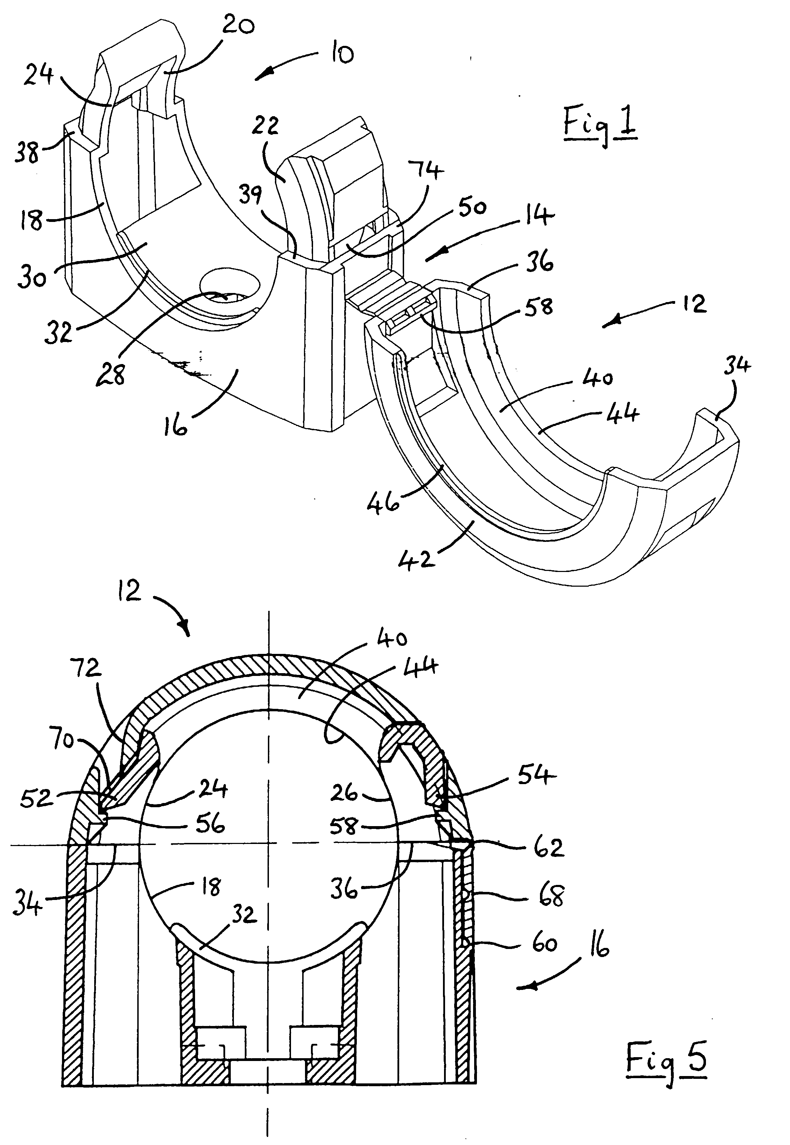

As shown in Figure 1, a saddle clip illustrating the invention comprises three component portions, viz. a saddle 10 and a cover 12 which are interconnected by means of a connecting strap 14. The three interconnected parts are formed as a unitary plastics moulding of , for example, Nylon 66 or polypropylene.

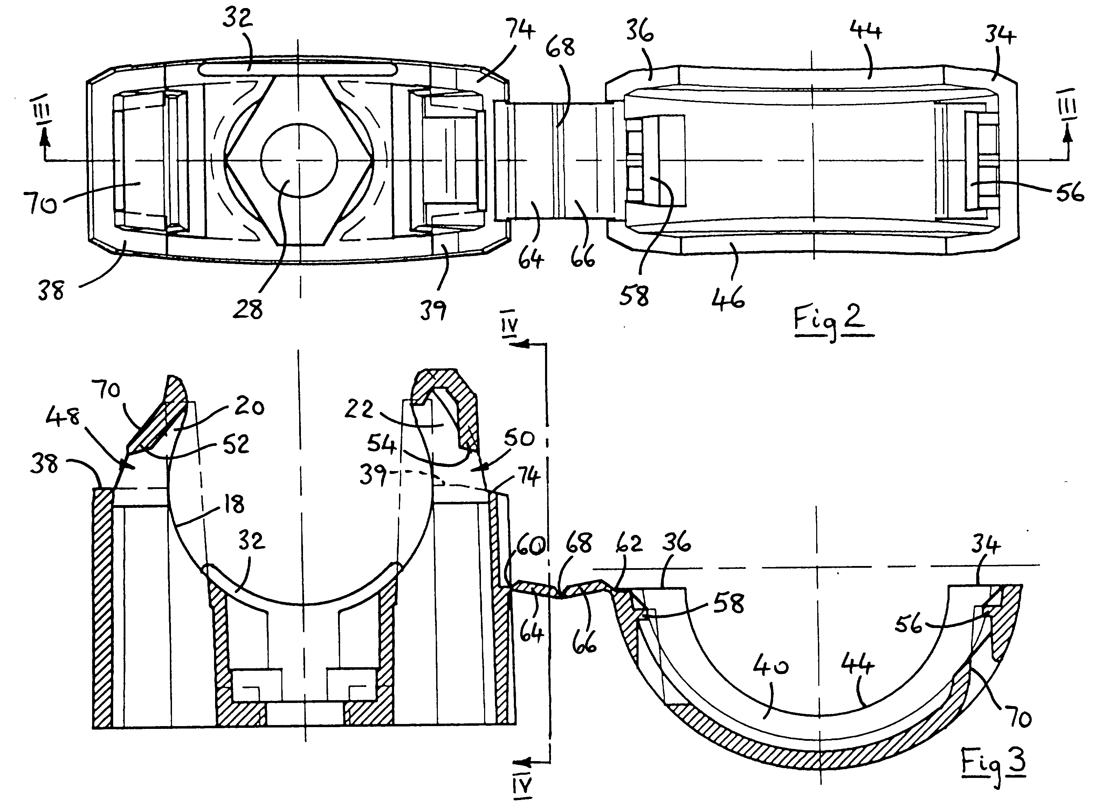

The saddle is of a conventional form for supporting an elongate cylindrical body, such as a tubular duct or pipe, comprising a flat-bottomed base 16 which forms a semi-cylindrical seating 18 and two upstanding arms 20,22 which comprise arcuate surfaces 24,26 which extend the seating around rather more than 180° (see Figure 3); by this arrangement a cylindrical element introduces between the arms can be restrained against withdrawal in a radial direction. A hole 28 through the base enables the saddle to be secured by means of a screw, bolt or other fastening to a flat surface. An upwardly-facing arcuate surface 30 of the base 16 is formed with a circumferentially-extending rib 32 in order to prevent longitudinal movement of corrugated conduit secured by the clip.

The cover 12 is in the form of a semi-circular bridge piece, being mountable on the base 16 to extend over the upstanding arms 20,22. The cover is of channel form in cross-section, to embrace the arms, comprising generally U-shaped co-planar bottom surfaces 34,36 which abut co-planar portions of top surfaces 38,39 of the base when the cover is mounted to stand on the base; the top surfaces 38,39 surround the bases of the arms 20,22. Side walls 40,42 of the channel-form cover provide semi-circular arcuate seating surfaces 44,46, which extends the seating 18 provided by the base 16 around 360° (see Figure 5).

With regard to Figure 3 especially, each of the arms 20,22 of the saddle defines a latching opening 48,50 immediately above the top surface 38,39 of the base 16 and beneath an abutment portion 52,54 of the arm. Correspondingly, the cover 12 comprises two latching teeth 56,58, one adjacent to each of its bottom surfaces 34,36, to engage in the latching openings (Figure 5) and so prevent radial (upwards as illustrated) removal of the cover from the saddle. Axial movement of the cover relative to the saddle is prevented by virtue of the side walls 40,42 of the cover which embrace the saddle arms.

The connecting strap 14 extends between a hinge connection 60 to the saddle base 16, at one end of the strap, at a position a little way below a proximal one of the latching openings 50, and a hinge connection 62 to the cover 12 at the other end of the strap. The latter connection is substantially at the level of the bottom surfaces 34,36 of the cover. The strap 14 comprises two rigid platelets 64,66 which are themselves joined by a hinge connection 68.

Figure 5 shows the clip closed, as it would be to retain a length of corrugated conduit (not shown). Each of the latching teeth 56,58 is engaged in its respective latching opening 48,50. The connecting strap 14 is held substantially taught. The distal saddle arm 20, remote from the strap connection to the cover 12, is formed to have a vertically-inclined upwardly facing surface 70 above its latching opening 48. A slot 72 through the cover above the surface 70 enables a screwdriver, or other thin-bladed tool, to be inserted, to slide down the inclined surface and consequently between the abutment portion 52 and cover 12 to prise the latching tooth 56 out from the latching opening 48. To enable that distal side of the cover 12 to be raised, lifting the tooth 56 above the opening 48, a portion 74 of the top surface 39 of the saddle base 16 adjacent to the strap connection is inclined downwardly from the interfacing plane between the co-planar top surfaces 38,39 of the base and bottom surfaces 34,36 of the cover. A wedge-shaped gap is so formed between the cover and the base, adjacent to the top end of the connecting strap 14, permitting the cover to pivot about a fulcrum so formed and rock downwards into the gap. As a consequence of this the adjacent latching tooth 58 is caused to be swung arcuately (in a generally radial direction relative to the saddle) out from the latching opening 50 beneath the bordering abutment portion 54 of the arm 22. The downwards movement of the cover and the hinge connection 62 above the connecting strap 14 is accompanied by some folding of the strap, as permitted by the intermediate hinge 68. Once both latching teeth have become disengaged from the latching openings, the cover can be lifted and swung away from the saddle, being restrained only by the connecting strap 14.

## Claims

1. A saddle clip for retaining a pipe or tube and comprising interengageable saddle (10) and cover (12) portions, characterised in that the saddle and cover portions are moulded in one piece together with a connecting strap (14), and wherein the cover when applied to the saddle is retained thereby without reliance upon the interconnecting strap.

2. A saddle clip according to claim 1 in which the cover portion (12) is arranged to stand on a base portion (16) of the saddle (10) with oppositely-directed latching means (56,58) of the cover engaged in latching recesses (48,50) positioned on opposite sides of the saddle, so to prevent the cover being lifted radially from the saddle.

3. A saddle clip according to claim 2 in which one of said latching means (58) is positioned on a proximal side of the cover (12) and saddle (10) at which the connecting strap (14) is attached, and the other (56) on a distal side remote from the connecting strap.

4. A saddle clip according to claim 3 wherein to enable the proximal latching means (58) to be withdrawn from the associated latching recess (50) the cover (12) is arranged to pivot on the base (16) about a fulcrum (39,74) positioned generally beneath the latching means, whereby after the distal latching means (56) has been disengaged the proximal latching means (58) can be withdrawn from the recess (50) by a pivotal movement of the cover.

5. A saddle clip according to claim 4 wherein in order to accommodate a longitudinal compression of the connecting strap (14) during the pivotal movement of the cover (12), the strap is hinged (68) at an intermediate position to enable some folding of the strap to occur.
